# EUROPÄISCHE PATENTSCHRIFT

(11) **EP 2 639 857 B1**
(45) Veröffentlichungstag und Bekanntmachung des Hinweises auf die Patenterteilung: **21.11.2018**
(21) Anmeldenummer: 13001220.6
(22) Anmeldetag: 11.03.2013
(51) Int. Cl.: H01M 2/20, H01M 10/42

(54) **Verbindungssystem für eine Energiespeichereinrichtung und Energiespeichereinrichtung mit dem Verbindungssystem**
Connection system for an energy storage device and energy storage device with the connection system
Système de liaison pour un dispositif d'accumulation d'énergie et dispositif d'accumulation d'énergie doté du système de liaison

(30) Priorität: 14.03.2012 DE 102012005120
(43) Veröffentlichungstag der Anmeldung: 18.09.2013
(73) Patentinhaber: Diehl Metal Applications GmbH, 14167 Berlin (DE)
(72) Erfinder: Heck, Harald, 90455 Nürnberg (DE); Hojda, Ralf, 58762 Altena (DE)
(74) Vertreter: Diehl Patentabteilung

(56) Entgegenhaltungen:
- WO-A1-2012/011237
- WO-A1-2012/023421
- DE-A1-102009 050 315
- US-A- 5 180 644

## Beschreibung

Die Erfindung betrifft ein Verbindungssystem für eine Energiespeichereinrichtung und eine Energiespeichereinrichtung mit dem Verbindungssystem.

Energiespeichereinrichtungen werden beispielsweise zum Speichern bzw. Zwischenspeichern von elektrischer Energie verwendet. Solche Energiespeichereinrichtungen können u.a. Akkumulatoren- oder Batteriepacks mit mehreren Zellen, d. h. Speicherzellen umfassen.

Verbindungssysteme kommen in der Regel zum Einsatz, um einzelne Zellen, insbesondere Akkumulator- oder Batteriezellen, und/oder aus mehreren Zellen bestehende Einheiten der Energiespeichereinrichtung elektrisch miteinander zu verbinden. Durch entsprechende Verbindungssysteme können die einzelnen Zellen oder Zellverbände in geeigneter Weise zusammengeschaltet werden, so dass eine gewünschte Zielspannung an Polen oder Abgriffen der Energiespeichereinrichtung abgegriffen werden kann.

Die WO 2011/038908 A1 offenbart eine Einrichtung zum elektrischen Zusammenschalten von Zellen eines Batteriepacks mittels Zellverbindern und ein Batteriepack mit den entsprechenden Zellverbindern. Die Zellverbinder sind als flexible Bügel aus elektrisch leitendem Material gebildet und auf einer Montageplatte mittels Haltemitteln gehaltert. Auf der Montageplatte sind erste Leiterbahnen angebracht, durch welche die Zellverbinder elektrisch miteinander verbunden sind. Zumindest einige der Zellverbinder kontaktieren zweite, ebenfalls auf der Montagplatte angeordnete Leiterbahnen, die dazu ausgebildet sind, Betriebsparameter der Zellen zu ermitteln oder zu messen. Die ersten und zweiten Leiterbahnen sind über elektrische Steckverbindungen, über Zwischenkontaktflächen oder Kabelverbindungen kontaktierbar.

Die DE 10 2009 050 315 A1 beschreibt eine Verbindungsvorrichtung zur Verbindung mehrerer Zellterminals von Zellen einer elektrochemischen Vorrichtung, wobei Zellverbinder und Kontaktelemente aus einem gemeinsamen Ausgangsmaterial herausgestanzt sein können und jeder Zellverbinder einstückig mit einer jeweils zugeordneten Leiterbahn sein kann. Die WO 2012/023421 A1 offenbart ein Modul zur Verbindung von Batteriezellen, bei welchem Zellverbinder und ein Schaltkreis zur Spannungserfassung gemeinsam in einem Harz vergossen sind, und die WO2012/011237 A1 beschäftigt sich mit einem Batteriemodul, bei dem ein flexibles Leiterplatten-Substrat zum Einsatz kommt, auf welcher ein Schaltkreis zur Spannungserfassung zwischen den Batteriepolen der einzelnen Batteriezellen montiert ist. Die US 5 180 644 A zeigt einen Batteriepack, bei welchem die Zellen über eine Rahmenstruktur gekoppelt sind.

Der Erfindung liegt die Aufgabe zugrunde, ein gegenüber dem Stand der Technik verbessertes Verbindungssystem anzugeben. Insbesondere soll ein kostengünstiges und raumsparendes Verbindungssystem für eine Energiespeichereinrichtung bereitgestellt werden.

Diese Aufgabe wird durch ein Verbindungssystem mit den Merkmalen des Anspruchs 1 und durch eine Energiespeichereinrichtung mit den Merkmalen des Anspruchs 12 gelöst. Bevorzugte oder vorteilhafte Ausführungsformen der Erfindung ergeben sich aus den Unteransprüchen, der nachfolgenden Beschreibung und/oder den beigefügten Figuren.

Es wird ein Verbindungssystem für eine Energiespeichereinrichtung zur Speicherung elektrischer Energie vorgeschlagen. Das Verbindungssystem kann insbesondere umfassen ein erstes elektrisches Verbindungssystem zur leistungsseitigen Verschaltung einzelner Akkumulatoren, insbesondere Akkumulatorpolen, und ein zweites elektrisches Verbindungssystem, insbesondere Verbindungsnetz oder gar Netz zur signalseitigen Verschaltung der einzelnen Akkumulatoren oder Akkumulatorpole.

Vorzugsweise ist die Energiespeichereinrichtung als ein Akkumulator- oder Batteriepack ausgebildet und/oder umfasst zumindest einen Akkumulator, Akkumulatorpack oder Batteriepack. Die Energiespeichereinrichtung weist eine Mehrzahl an Zellen, insbesondere Akkumulator- oder Batteriezellen auf, welche vorzugsweise als Lithium-Ionen-Zellen ausgebildet sind. Aber auch Verschaltung von NiMH-Zellen, Thermalbatterien und Zellen von Brennstoffzellen sind möglich. Möglich ist, dass jede Zelle eine oder mehrere Unterzellen umfassen kann. Die Speicherung elektrischer Energie in den Zellen kann elektrisch und/oder chemisch erfolgen.

Das Einsatzgebiet derartiger Energiespeichereinrichtungen ist vielfältig. Insbesondere eignen sich solche Energiespeichereinrichtungen zum Antrieb von Elektromotoren von Elektrofahrzeugen, zur dezentralen Speicherung und/oder Bereitstellung elektrischer Energie, insbesondere zur Bereitstellung von Energie in Flugzeugen. Insbesondere können diese Energiespeichereirichtungen verwendet werden, Energie in einem Energieversorgungsnetz zu puffern. Weitere Anwendungen sind denkbar, insbesondere Anwendungen im Bereich alternativer Antriebssysteme, insbesondere für Hybrid-, Elektro- und Brennstoffzellenfahrzeuge.

Das Verbindungssystem ist vorzugsweise plattenartig, d. h. in plattenartiger Form und/oder netzartig ausgebildet. Das Verbindungssystem kann ein Trägersystem, insbesondere ein plattenartiges und/oder netzartiges Trägersystem bzw. eine entsprechend ausgebildete Trägerstruktur, aufweisen oder ausbilden. Das Trägersystem bzw. die Trägerstruktur kann dazu ausgelegt sein, das erste und/oder zweite elektrische Verbindungssystem mechanisch stabilisiert zu tragen. Insbesondere ist es möglich, dass die Trägerstruktur eine aus einem das erste und/oder zweite elektrische Verbindungssystem und einem Trägermaterial, insbesondere einem Kunststoff, gebildete Verbundstruktur aufweist, in welchem sich das Trägermaterial und die Elemente des ersten und zweiten Verbindungssystems ggf. mechanisch verstärken können, insbesondere hinsichtlich Biege- und/oder Dehnbeanspruchungen.

Auf Grund der plattenartigen und/oder netzartigen Form kann, das Verbindungssystem in einfacher Weise auf die Energiespeichereinrichtung, z.B. eine Sekundärbatterie, gelegt, bzw. auf dieser angeordnet werden, so dass die Zellverbinder auf den Polen der Zellen der Energiespeichereinrichtung angeordnet sind, und die Pole der Zellen kontaktiert werden können . Oder anders ausgedrückt, das Verbindungssystem kann durch die plattenartige und/oder netzartige Form die Pole der Zellen, die beispielsweise in einer gemeinsamen Zellpolebene angeordnet sein können, überdecken und kontaktieren. Bevorzugt ist das Verbindungssystem dazu ausgebildet, die Mehrzahl an Zellen der Energiespeichereinrichtung elektrisch miteinander zu verbinden, sodass eine sich entsprechend der mit der Verbindungssystem bewirkten Zusammenschaltung der Zellen ergebende Gesamtspannung abgegriffen werden kann, beispielsweise an Ausgängen des die Pole leistungsseitig verschaltenden ersten elektrischen Verbindungssystems.

Zum elektrischen Zusammenschalten der Zellen umfasst das Verbindungssystem eine Mehrzahl an Zellverbindern. Unter einem Zellverbinder soll insbesondere ein elektrisch leitendes Element verstanden werden, welches mit dem Pol zumindest einer Zelle der Energiespeichereinrichtung, in einer die Zelle elektrisch kontaktierenden Weise, verbunden werden kann. Ein Zellverbinder kann beispielsweise dazu ausgelegt sein, zwei, insbesondere benachbarte, Zellpole seriell zu verschalten.

Vorzugsweise kontaktieren die Zellverbinder bei Auflage des Verbindungssystems auf der Energiespeichereinrichtung jeweils einen positiven und einen negativen Pol zweier, insbesondere benachbarter, Zellen, um die beiden Zellen elektrisch miteinander zu verbinden. Der Zellverbinder kann beispielsweise eine rechteckige Form oder Außenkontur aufweisen, z. B. in Form eines rechteckigen Streifens ausgebildet sein. Der Zellverbinder kann dabei derart dimensioniert sein, dass er sich zur Herstellung einer elektrischen Verbindung vom Pluspol der einen Zelle zum Minuspol der anderen der zu verbindenden Zellen erstrecken kann. Neben der vorweg beschriebenen Reihenschaltung ist auch eine Parallelverschaltung der Zellen möglich. Vorteilhaft ist es, wenn die Bereiche zwischen denjenigen Stellen, an welchen ein Zellverbinder mit entsprechenden Zellpolen verbunden wird bzw. werden kann, gegenüber Torsion, Biegung und/oder Dehnung zumindest derart flexibel sind, dass unterschiedliche Zellpolniveaus und/oder Bewegungen der Zellen der Energiespeichereinrichtung im fertig montierten Zustand und/oder Vibrationen ausgeglichen werden können, insbesondere um mögliche Schäden an den Zellverbindern und/oder Verbindungen zwischen Zellverbinder und Zellpolen, zumindest weitgehend, zu vermeiden.

Entsprechend der Erfindung umfasst das Verbindungssystem als solches eine Speicherkontrolleinheit, insbesondere zur Statusüberwachung der Zellen, insbesondere zur Überwachung eines Energievorrats oder Ladezustands der Zellen, wobei das Trägersystem bzw. die Tragstruktur dazu ausgebildet ist, die Speicherkontrolleinheit aufzunehmen und/oder zu haltern. Die Speicherkontrolleinheit, beispielsweise eine elektronische Baueinheit, ist mit dem Trägersystem integriert oder lösbar, insbesondere steckbar, ausgebildet sein.

Des Weiteren umfasst das Verbindungssystem eine Mehrzahl an Kontrollleitungen, die zur Übertragung elektrischer Signale zwischen den Zellverbindern und der Speicherkontrolleinheit geeignet und/oder ausgebildet sind. Die Kontrollleitungen werden von dem Trägersystem bzw. von der Trägerstruktur fixiert, insbesondere gehaltert und stabilisiert. Beispielsweise können die Kontrollleitungen in einer Kunststoffmatrix der Trägerstruktur eingebettet sein. Bevorzugt sind die Kontrollleitungen des Verbindungssystems mit einem von der Trägerstruktur umfassten Kunststoffmaterial umspritzt.

Insoweit ergibt sich ein integriertes Verbindungssystem, durch welches in einem einzigen Bauelement Signallleitungen, die leistungsseitige Verschaltung der Zellpole, und eine Speicherkontrolleinheit bzw. eine Aufnahme dafür, bereitgestellt werden können. Neben vorteilhaften mechanischen Eigenschaften kann durch die Trägerstruktur, insbesondere durch eine Kunststoffumspritzung, beispielsweise auch ein Schutz der Kontrollleitungen usw. vor äußeren Einflüssen erreicht werden, insbesondere ein Schutz vor mechanischen Einwirkungen und/oder Korrosion.

Anhand der übermittelten Signale erfasst und/oder erkennt und/oder überwacht die Speicherkontrolleinheit den Status, insbesondere Energievorrat oder Ladezustand, der Zellen, die durch den Zellverbinder zusammengeschaltet, d. h .elektrisch miteinander verbunden, sind. Die Speicherkontrolleinheit kann auch andere Funktionen zum Betrieb der Energiespeichereinheit und/oder des Verbindungssystems aufweisen oder bereitstellen.

Erfindungsgemäß ist zumindest einer der Zellverbinder und mindestens eine diesem Zellverbinder zugeordnete, bzw. eine zu diesem Zellverbinder gehörende, Kontrollleitung als ein Übertragungselement einstückig ausgebildet. Insbesondere können zumindest ein Zellverbinder und eine diesem zugeordnete Kontrollleitung einstückig gemeinsam aus einem einzigen Halbzeug gefertigt sein. Mehrere der Zellverbinder und die diesen zugeordnete Kontrollleitungen können insbesondere in Form eines Stanzgitters aus einem einzigen Halbzeug gefertigt sein, wobei etwaige Verbindungen, d.h. Stege, zwischen den einzelnen Zellverbinder-Kontrollleiter-Paaren des Stanzgitters nach Verbinden mit dem Trägersystem noch freigestanzt werden können.

Beispielsweise kann das Halbzeug als ein aufgewickeltes Metallband, insbesondere als ein so genanntes Coil ausgebildet sein. Im Speziellen werden der Zellverbinder und die diesem zugeordnete Kontrollleitung bei der Fertigung und insbesondere zeitgleich, insbesondere als eine Einheit, als das Übertragungselement aus dem Halbzeug, insbesondere Metallband, herausgetrennt, insbesondere gestanzt. Somit bilden Zellverbinder und die zugeordnete Kontrollleitung eine einstückige Einheit. Insbesondere sind der mindestens eine Zellverbinder und die mindestens eine dem Zellverbinder zugeordnete Kontrollleitung aus einem gemeinsamen Materialabschnitt des Halbzeugs, insbesondere Metallbands, gefertigt.

Bevorzugt ist, dass mehrere Übertragungselemente, umfassend jeweils Zellverbinder und Kontrollleitung, in einem Fertigungsgang, insbesondere zusammen und/oder zeitgleich, gefertigt werden. Hierzu können die mehreren Übertragungselemente z.B. beabstandet nebeneinander, gemeinsam und/oder zeitgleich aus dem Halbzeug herausgetrennt werden. Bevorzugt werden die zumindest für einen Abschnitt des Verbindungssystems erforderlichen Übertragungselemente, ggf. sogar alle Übertragungselemente eines Verbindungssystems, zeitgleich aus dem Halbzeug herausgetrennt. Das Heraustrennen der gesamten Übertragungselemente, d.h. Zellverbinder und zugeordnete Kontrollleitungen, aus einem Halbzeug kann, wie bereits erwähnt, in Form eines Stanzgitters erfolgen, bei welchem die endgültige Lage und Anordnung der Übertragungselemente bereits umgesetzt bzw. vorhanden ist. Zur Sicherung bzw. Fixierung der Lage und gegenseitigen Anordnung der Übertragungselemente können diese zunächst im Stanzgitter durch Verbindungsstege miteinander und untereinander verbunden bzw. fixiert sein, wobei die Verbindungsstege nach Fixierung der Übertragungselemente auf der Tragstruktur bzw. durch das Trägersystem durchtrennt bzw. ausgestanzt werden können. Die Fixierung der Übertragungselemente kann, wie bereits erwähnt, dadurch erfolgen, dass das Stanzgitter mit den Übertragungselementen mit einem Kunststoff umspritzt wird.

Dadurch dass der Zellverbinder und die dem Zellverbinder zugeordnete Kontrollleitung, die zusammen das Übertragungselement bilden, gemeinsam aus dem Halbzeug gefertigt werden können, kann das Verbindungssystem hinsichtlich Design, Bauraum, Kosten und Gebrauchssicherheit vereinfacht bzw. optimiert werden.

Ein besonderer Vorteil ist, dass das Übertragungselement einteilig bzw. einstückig ausgebildet ist. Damit kann die Herstellung einer ansonsten erforderlichen elektrisch leitfähigen Verbindung zwischen dem Zellverbinder und der Kontrollleitung entfallen. Insbesondere können Kosten dadurch eingespart werden, dass ansonsten erforderliche sog. Mischschweißverbindungen zwischen den Zellverbindern und den Kontrollleitungen entfallen.

Insbesondere wegen den nicht vorhandenen bzw. erforderlichen Mischschweißverbindungen oder anderer elektrischer Kontaktierungen und Verbindungen zwischen Zellverbinder und Kontrollleitung können auch vergleichsweise vorteilhafte elektrische Eigenschaften für das Übertragungselement erreicht werden.

Weiterhin ergibt sich durch die Einteiligkeit und Ein-Materialigkeit, insbesondere die monolithische Ausgestaltung, der Übertragungselemente in vorteilhafter Weise eine einfache und schnelle Montage im Verbindungssystem. Erwähnenswert ist weiterhin, dass durch die einstückig aus dem Halbzeug hergestellten Übertragungselemente Bauraum im Verbindungssystem eingespart werden kann. Ferner ermöglichen die vorgeschlagenen Übertragungselemente auch Gewichtseinsparungen.

In einer bevorzugten Ausgestaltung der Erfindung ist das Übertragungselement als ein Stanzteil ausgebildet. Vorzugsweise wird das Übertragungselement bei der Fertigung aus dem Halbzeug, insbesondere dem Metallband, im Speziellen aus dem Coil, ausgestanzt.

In einer bevorzugten Ausbildungsform ist das Übertragungselement aus einem Stufenband gestanzt, welches im Stanzbereich unterschiedliche Dicken, insbesondere eine erste und eine zweite Dicke, aufweist. Vorzugsweise ist das Stufenband derart ausgebildet und/oder die Stanzung derart durchgeführt, dass der Zellverbinder des Übertragungselements die erste Dicke aufweist, und dass die dem Zellverbinder zugeordnete Kontrollleitung des Übertragungselements die zweite Dicke aufweist. Besonders bevorzugt ist die erste Dicke größer als die zweite Dicke.

Beispielsweise weist der Zellverbinder des Übertragungselements die erste Dicke von maximal 3,0 mm, vorzugsweise 2,0 mm, 1,5 mm oder 1,2 mm auf. Die dem Zellverbinder zugeordnete Kontrollleitung weist die zweite Dicke von vorzugsweise maximal 1,5 mm, vorzugsweise 1,0 mm, 0,7 mm, oder 0,5 mm auf. In bevorzugter Ausbildung beträgt die erste Dicke des Zellverbinders etwa 1,2 mm die zweite Dicke der Kontrollleitung etwa 0,5 mm.

Durch die Ausbildung des Zellverbinders und der Kontrollleitung in den unterschiedlichen Dicken kann die generell unterschiedliche und jeweils erforderliche Stromtragfähigkeit, d. h. Stromfestigkeit, der beiden Elemente berücksichtigt werden. Das bedeutet, dass die Dicke der elektrischen Leitersegmente des Übertragungselements entsprechend der jeweiligen Stromfestigkeit gewählt werden kann, indem als Halbzeug ein Stufenband mit entsprechenden Dickenstufen verwendet wird. In der Regel wird über den Zellverbinder ein höherer Strom fließen als über die Kontrollleitung. Durch die gegenüber dem Zellverbinder reduzierte Dicke der Kontrollleitung kann Material und damit Gewicht eingespart werden.

In einer besonders bevorzugten Ausgestaltung der Erfindung sind mindestens zwei Übertragungselemente in einer Reihe angeordnet. Vorzugsweise sind hierzu mindestens zwei der Zellverbinder beabstandet zueinander in der Reihe, insbesondere fluchtend zueinander bzw. hintereinander, angeordnet, wobei sich von jedem der in Reihe angeordneten Zellverbinder die den jeweiligen Zellverbindern zugeordneten Kontrollleitungen weg erstrecken. Die Zellverbinder und/oder die Kontrollleitungen liegen bevorzugt in einer gemeinsamen Ebene.

Die Kontrollleitungen können sich in einer geeigneten Leitungsführung zur Speicherkontrolleinheit oder zu einer für die Speicherkontrolleinheit vorgesehenen Aufnahme bzw. Schnittstelle für die Speicherkontrolleinheit hin erstrecken.

Optional ergänzend umfasst die Reihe aus mindestens zwei Zellverbindern und jeweils zugeordneten Kontrollleitungen des Weiteren zwei Abgriffeinrichtungen, welche zum Abgriff einer durch die Energiespeichereinrichtung erzeugten elektrischen Spannung, d. h. einer durch die von den Zellverbindern verbundenen Zellen erzeugten elektrischen Spannung, geeignet und/oder ausgebildet sind.

Insbesondere bilden mehrere der Übertragungselemente und optional ergänzend, die beiden Abgriffeinrichtungen, als Komponenten zusammen einen so genannten Leadframe des Verbindungssystems. Beispielsweise ist der Leadframe als ein Stanzgitter aus dem Halbzeug gebildet.

Vorzugsweise wird der Leadframe bei, während oder unmittelbar nach dem Stanzen mit Kunststoff umspritzt, sodass die den Leadframe bilden Komponenten sicher, insbesondere stoffschlüssig miteinander verbunden sind, nicht auseinanderfallen können, und zumindest teilweise vor Korrosion geschützt sind.

Die Erfindung sieht vor, dass das Verbindungssystem einen ersten und einen zweiten Leadframe umfasst. Hierbei ist es bevorzugt, dass einer der beiden Leadframes alle bisher genannten Komponenten, d. h. mindestens zwei Zellverbinder, die den Zellverbindern zugeordneten Kontrollleitungen und die beiden Abgriffeinrichtungen umfasst, wobei der andere der beiden Leadframes bevorzugt lediglich mindestens zwei Zellverbinder und zugehörige Kontrollleitungen umfasst.

Eine bevorzugte konstruktive Umsetzung der Erfindung sieht vor, dass sich die in einer Reihe angeordneten Zellverbinder des ersten Leadframes und die in einer Reihe angeordneten Zellverbinder des zweiten Leadframes gleichlaufend zueinander, insbesondere bezüglich einer Mittenebene zwischen den Reihen in symmetrischer Anordnung, erstrecken. Bevorzugterweise ist die Reihe der Zellverbinder des ersten Leadframes parallel zu der Reihe der Zellverbinder des zweiten Leadframes. Insbesondere in dieser Anordnung kann erreicht werden, dass das Verbindungssystem in weiten Grenzen skalierbar ist, so dass eine Anpassung an unterschiedlichste Größen von Energiespeichereinrichungen, insbesondere Batterien, möglich ist.

In einer bevorzugten Ausbildungsform der Erfindung ist der erste Leadframe aus einem ersten Halbzeugabschnitt und der zweite Leadframe aus einem zweiten Halbzeugabschnitt des Halbzeugs gebildet, insbesondere gestanzt. Insbesondere sind beide Leadframes aus demselben Halbzeug, insbesondere demselben Coil, Metallband oder aus der gleichen Halbzeugart gefertigt. Somit weisen beide Leadframes das gleiche Ausgangsmaterial auf. Eine gemeinsame Herstellung aus einem Halbzeug kann bei einem fertiggestellten Verbindungssystem beispielsweise dadurch erkannt werden, dass etwaige Übertragungselemente oder andere Stellen korrespondierende Freistanzungen ursprünglich zur Stabilisierung vorgesehener Verbindungsstege aufweisen.

Erfindungsgemäß sind der erste und zweite Leadframe in einem vom Trägersystem umfassten, gemeinsamen Trägerteil angeordnet. Vorzugsweise sind beide Leadframes in dem gemeinsamen Trägerteil stoffschlüssig integriert. Insbesondere können die beiden Leadframes wie bereits zuvor erwähnt mit dem Kunststoff umspritzt sein, der das Trägerteil bilden kann.

Das Trägerteil kann beispielsweise rechteckförmig, insbesondere rechteckig ausgebildet sein, wobei die beiden Leadframes an Längsseiten des rechteckförmigen Trägerteils angeordnet sein können, bzw. entlang der Längsseiten verlaufen können. In einer bevorzugten Ausgestaltung des Verbindungssystems ist zwischen den beiden Leadframes die Speicherkontrolleinheit oder die hierfür vorgesehene Aufnahme bzw. Schnittstelle im Trägerteil angeordnet.

Das Trägerteil als solches weist die Aufnahme bzw. Schnittstelle für die Speicherkontrolleinheit auf. Die Speicherkontrolleinheit und die Aufnahme bzw. Schnittstelle sind vorzugsweise derart ausgebildet, dass die Speicherkontrolleinheit in die Aufnahme eingesetzt, insbesondere lösbar eingesetzt, werden kann, bevorzugt in einfacher Weise eingesetzt und darin in ausreichendem Maße fest gehaltert werden kann. Die Speicherkontrolleinheit kann in der Aufnahme bzw. Schnittstelle beispielsweise durch eine rastende, insbesondere einrastende Verbindung gehaltert werden bzw. sein. Auch andere Verbindungsarten sind möglich. Eine elektrische Kontaktierung zwischen Kontakten der Speichereinheit und Kontakten der Aufnahme kann beispielsweise über Federkontakte oder sonstige Steck- oder Steckerverbindungen erfolgen. Bevorzugt sind die Kontakte derart ausgebildet, dass korrespondierende Kontaktelemente beim Einsetzen der Speicherkontrolleinheit in die Aufnahme automatisch miteinander elektrisch kontaktiert werden.

Im Rahmen der Erfindung ist es denkbar, dass die Speicherkontrolleinheit bei Bedarf beschädigungs- und/oder zerstörungsfrei aus der Aufnahme wieder entnehmbar ist. Vorzugsweise wird die Speicherkontrolleinheit in die Aufnahme eingedrückt und/oder eingeclipst und/oder darin verrastet und/oder in sonstiger Weise durch mechanische Verbindungen in der Aufnahme gehaltert. Zur Befestigung der Speicherkontrolleinheit in der Aufnahme sind jedoch auch andere Verbindungsarten denkbar, insbesondere Lötverbindungen, Schweißverbindungen, Crimpverbindungen, Verstemmungen und dgl. Löt- und Schweißverbindungen können beispielsweise an elektrischen Kontaktelementen zwischen Speicherkontrolleinheit und der Schnittstelle ausgebildet werden. Insgesamt eignen sich zum Haltern und Befestigen der Speicherkontrolleinheit in der Aufnahme form-, kraft- und/oder stoffschlüssige Verbindungen. Neben den erwähnten lösbaren Verbindungen kommen auch nicht lösbare Verbindungen in Betracht. Beispielsweise ist es möglich, dass die in die Aufnahme eingesetzte Speicherkontrolleinheit, ggf. nach einer Funktionskontrolle, durch eine i. W. nicht, d. h. nicht ohne Weiteres, lösbare Schweiß- oder Lötverbindung befestigt wird.

Eine bevorzugte Ausgestaltung des Verbindungssystems sieht vor, dass das Trägersystem, insbesondere das Trägerteil, erste Kontaktfedern mit frei zugänglichen ersten Kontaktflächen aufweist. Vorzugsweise sind die Kontaktfedern durch Endbereiche der im Trägersystem, insbesondere im Trägerteil, angeordneten, insbesondere dort integrierten, Kontrollleitungen gebildet. Im Speziellen können die Kontrollleitungen so im Trägerteil eingespritzt sein, dass deren Endbereiche freiliegen, insbesondere aus dem Trägerteil hervorstehen, insbesondere nach Art und Funktion von Kontaktfedern. Besonders bevorzugt ist, dass die Endbereiche abgewinkelt ausgebildet sind. In einer bevorzugten konstruktiven Umsetzung der Erfindung grenzen die Endbereiche der Kontrollleitungen, insbesondere deren Kontaktflächen, an die Seitenbereiche der Aufnahme für die Speicherkontrolleinheit an und/oder sind entlang der Seiten der Aufnahme, insbesondere korrespondierend zur Anordnung von Kontakten der Speicherkontrolleinheit, angeordnet.

Optional kann die Speicherkontrolleinheit zweite Kontaktfedern mit zweiten Kontaktflächen aufweisen. Vorzugsweise kontaktieren die zweiten Kontaktfedern mit den zweiten Kontaktflächen bzw. sind mit diesen in Kontakt, d. h. in elektrischem Kontakt, so dass eine Übertragung bzw. ein Abgriff von Kontrollsignalen möglich ist. Von Vorteil kann es sein, wenn die ersten Kontaktfedern an den ersten Kontaktflächen automatisch einen elektrischen Kontakt mit korrespondierenden, zweiten Kontaktflächen der zweiten Kontaktfedern herstellen, wenn die Speicherkontrolleinheit in die Aufnahme bzw. Schnittstelle eingesetzt ist bzw. wird.

Bei eingesetzter Speicherkontrolleinheit und Kontaktschluss von ersten Kontaktfedern mit korrespondierenden zweiten Kontaktfedern kann eine Signalübertragung zwischen der Speicherkontrolleinheit und den Zellverbindern, und damit den Zellen der Energiespeichereinrichtung gewährleistet werden. Jeweils korrespondierende erste Kontaktfedern und zweite Kontaktfedern können, insbesondere auch optional, vorzugsweise durch eine formschlüssige, kraftschlüssige und/oder stoffschlüssige Verbindung miteinander verbunden sein.

Zweckmäßigerweise sind die Zellverbinder und Kontrollleitungen, insbesondere das Halbzeug, aus einem Blechmaterial mit hinreichenden Stromleitungseigenschaften gebildet. Besonders bevorzugt ist jedoch, als Material für die Zellverbinder und Kontrollleitungen, insbesondere das Halbzeug, Aluminium oder eine Aluminiumlegierung, beispielsweise AI 99.5, oder Kupfer oder eine Kupferlegierung zu verwenden. Mit Aluminium und Aluminiumlegierungen können insbesondere vergleichsweise geringe Bauteilgewichte erreicht werden. Darüber hinaus kann mit Aluminium bzw. einer Aluminiumlegierung u.U. ein Kostenvorteil erreicht werden. Mit Kupfer oder Kupferlegierungen können insbesondere vergleichsweise gute elektrische Leitfähigkeiten erreicht werden. Beim Einsatz des Verbindungssystems bei einer zum Antrieb eines Elektrofahrzeugs vorgesehenen Energiespeichereinrichtung, kann durch die Gewichtsreduzierung z.B. ein Energieverbrauch des Elektrofahrzeugs gesenkt werden. Neben den vorgeschlagenen einzelnen Materialien ist es auch denkbar, dass das Verbindungssystem, insbesondere die Zellverbinder und/oder die Kontrollleitungen und/oder die aus Zellverbinder und Kontrollleitungen gebildeten Übertragungselemente aus einem Metall-Metall-Verbund hergestellt sind, beispielsweise aus einem Aluminium-Kupfer-Verbund, wobei hier auch Aluminium bzw. Kupferlegierungen verwendet werden können. Je nach Eigenschaften der zu kontaktierenden Gegenkontakte, im Falle der Zellverbinder sind das insbesondere die Zellpole, und im Fall der Kontrollleitungen sind das insbesondere die Kontakte der Speicherkontrolleinheit, kann der Metall-Metall-Verbund ausgewählt werden, so dass ggf. optimierte Übergangswiderstände an jeweiligen Kontaktstellen erreicht werden können. Bei geeigneter Wahl entsprechender Metallmaterialien für den Metall-Metall-Verbund kann insbesondere erreicht werden, dass das Gesamt-Verbindungssystem eine jeweils optimierte Gesamtleitfähigkeit umfasst.

Besonders bevorzugt sind die Zellverbinder und/oder Kontrollleitungen, insbesondere das Halbzeug, insbesondere in der Ausbildung aus Aluminium oder der Aluminiumlegierung, zumindest teil- und/oder abschnittsweise mit einem anderen Material plattiert, z.B. walzplattiert, und/oder beschichtet. Vorzugsweise sind zumindest elektrische Kontaktierungsstellen des Halbzeugs entsprechend plattiert und/oder beschichtet. Vorzugsweise ist bzw. wird bei der Plattierung bzw. Beschichtung ein für das Material des zu kontaktierenden Gegenkontakts, insbesondere des zu kontaktierenden Zellpols, entsprechendes Material verwendet, beispielsweise im Hinblick auf Übergangswiderstände und andere. Insbesondere in Frage kommt für das andere Material Aluminium, Kupfer, Silber, Zinn, Gold und Legierungen derselben, insbesondere Kupferlegierungen und Aluminiumlegierungen.

Wenn beispielsweise die Zellpole aus Kupfer oder einer Kupferlegierung gebildet oder damit beschichtet sind, können die Zellverbinder an denjenigen Stellen, welche mit den Zellpolen zu kontaktieren sind bzw. kontaktiert werden, bevorzugt zumindest teilweise mit Kupfer oder einer Kupferlegierung beschichtet oder plattiert sein. Dies ist hinsichtlich der elektrischen Leitfähigkeit oder Materialverträglichkeit und hinsichtlich der Übergangswiderstände von Vorteil.

Generell sollten die in elektrischen Kontakt gebrachten Oberflächen, insbesondere der Zellpole, Zellverbinder usw., aus elektrisch kompatiblen Materialien bestehen. Sofern die Kernmaterialien der entsprechenden Elemente nicht oder weniger gut kompatibel sind, können, wie in obigem Beispiel bereits erwähnt, geeignete Beschichtungen verwendet werden.

In einer bevorzugten Ausbildungsform der Erfindung sind die zweiten Kontaktfedern aus einer Kupferlegierung, insbesondere Bronze oder einer Bronzelegierung, beispielsweise CuSn6, oder Messing oder einer Messinglegierung gebildet. Je nach Materialkombinationen können unterschiedliche Beschichtungsmaterialien verwendet werden. Als Beschichtungsmaterialien kommen insbesondere in Frage: Kupfer, Aluminium, Silber, Zinn, Gold, sowie die genannten Elemente enthaltende Legierungen, Legierungen generell, insbesondere Kupferlegierungen und dergleichen. Bei der Wahl der Beschichtung sollte sichergestellt sein, dass sich vorteilhafte Übergangswiderstände zwischen den zu verbindenden elektrischen Kontakten ergeben. Insbesondere sollte eine vergleichsweise hohe Langzeitstabilität bzw. geringe Alterung der Beschichtungen sichergestellt werden, d. h. dass sich z. B. die Übergangswiderstände in Zeitverlauf möglichst wenig ändern. Neben der Verbesserung des Übergangswiderstands kommt Beschichtungen auch Korrosionsschutzfunktion zu, die ebenfalls langlebig und zeitstabil sein sollte.

Ein weiterer Gegenstand der Erfindung betrifft eine Energiespeichereinrichtung mit einem wie oben beschriebenen Verbindungssystem insbesondere in einer beliebigen hierin vorgeschlagenen Ausgestaltung oder Variante desselben. Insbesondere wird auf die bisherige Beschreibung verwiesen. Vorzugsweise ist die Energiespeichereinrichtung als ein Akkumulator- oder Batteriepack ausgebildet. Vorzugsweise handelt es sich bei der Energiespeichereinrichtung um einen Hochvoltspeicher, insbesondere für Fahrzeuge, insbesondere Elektrofahrzeuge. Jedoch sind auch Niedervoltanwendungen, insbesondere Niedervoltspeicher denkbar.

Denkbar im Rahmen der Erfindung ist ebenfalls, dass die Energiespeichereinrichtung in stationären Anwendungen, insbesondere als Energiespeicher bzw. Zwischenspeicher, insbesondere in Stromnetzen, einsetzbar ist. Im Speziellen kann die Energiespeichereinrichtung dazu ausgebildet sein, als Spannungs- und Energiequelle eine elektromotorische Traktion oder einen elektromotorischen Antrieb zu gewährleisten. Denkbar ist es auch, die Energiespeichereinrichtung in Luftfahrtanwendungen, insbesondere in Flugzeugen, zur Energieversorgung bzw. Notstromversorgung, bereitzustellen und zu verwenden.

Weitere Merkmale, Vorteile und Wirkungen der Erfindung ergeben sich aus der nachfolgenden Beschreibung bevorzugter Ausführungsbeispiele der Erfindung. Dabei zeigen:
- Figur 1: eine perspektivische Draufsicht auf ein Verbindungssystem für eine Energiespeichereinrichtung;
- Figur 2: das Verbindungssystem und die Energiespeichereinrichtung aus Fig. 1;
- Figur 3: eine alternative Darstellung des Verbindungssystems aus Fig. 1;
- Figur 4: eine Trägerplatte mit einer Mehrzahl an Zellverbindern und Kontrollleitungen;
- Figur 5: ein aus einem Halbzeug gefertigtes Übertragungselement des Verbindungssystems aus Fig. 1;
- Figur 6a: eine Draufsicht auf einen ersten Leadframe des Verbindungssystems aus Fig. 1;
- Figur 6b: eine Draufsicht auf einen zweiten Leadframe des Verbindungssystems;
- Figur 7: eine Detailansicht einer in der Trägerplatte aus Fig. 5 angeordneten Aufnahme für eine Speicherkontrolleinheit aus Fig. 5;
- Figur 8: eine Speicherkontrolleinheit des Verbindungssystems aus Fig. 1;
- Figur 9: eine Detailansicht der Kontaktierung zwischen der Speicherkontrol-leinheit aus Fig. 7 und den Leadframes aus den Fig. 6a; 6b.

Einander entsprechende oder gleiche Teile sind in den Figuren jeweils mit den gleichen Bezugszeichen versehen.

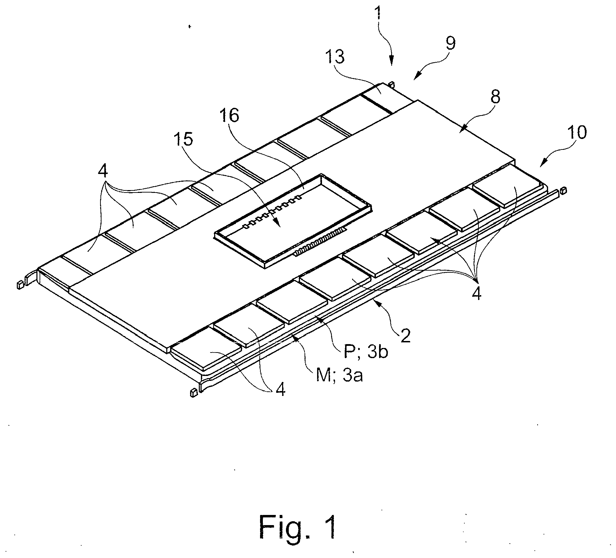

Figur 1 zeigt eine perspektivische Draufsicht auf ein Verbindungssystem 1 als ein Ausführungsbeispiel der Erfindung. Das Verbindungssystem 1 ist dazu geeignet und/oder ausgebildet, auf einer Energiespeichereinrichtung 2 angeordnet zu werden und diese zu bedecken. Hierzu ist das Verbindungssystem 1 plattenartig ausgebildet, wobei es in - Längs- und Lateralerstreckung etwa die gleiche Außenkontur wie die Energiespeichereinrichtung 2 aufweist.

Die Energiespeichereinrichtung 2 kann als ein Akkumulator- oder Batteriepack dazu ausgebildet sein, als Spannungsquelle den Antrieb eines Motors, z.B. in Elektrofahrzeugen zu gewährleisten. Andere, bereits weiter oben erwähnte Anwendungen der Energiespeichereinrichtung 2 wie z. B. als mobile/stationäre Zwischenspeicher in Energienetzen bzw. Stromnetzen, in der Luftfahrt oder in der Rüstungsindustrie.

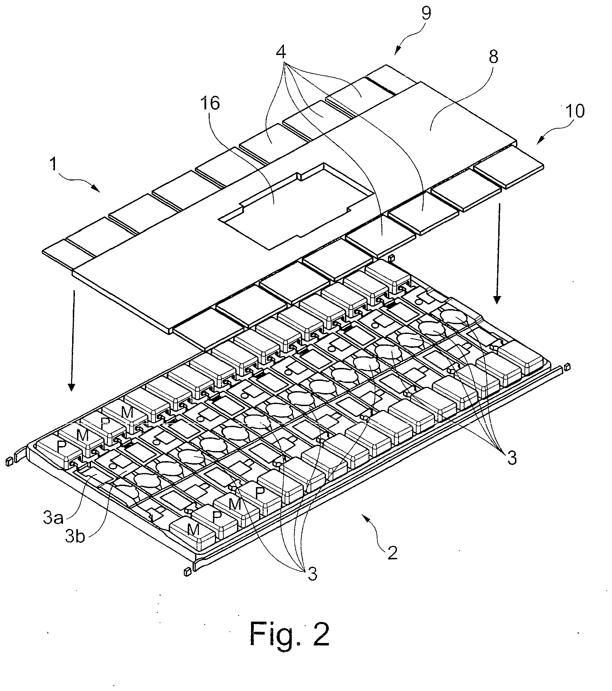

Gemäß der Detaildarstellung der Fig. 2 umfasst die Energiespeichereinrichtung 2 eine Mehrzahl an Zellen 3, insbesondere Lithium-Ionen-Akkumulatoren oder -Batterien. Die Zellen 3 sind benachbart nebeneinander zu einem Block bzw. Pack angeordnet. Jede Zelle 3 weist einen Plus- und Minuspol P; M auf, wobei neben dem Pluspol P einer ersten Zelle 3a der Minuspol M einer zweiten Zelle 3b angeordnet ist.

Wie in Fig. 1 gezeigt, umfasst das auf der Energiespeichereinrichtung 2 angeordnete Verbindungssystem 1 eine Mehrzahl an Zellverbindern 4. Die Zellverbinder 4 weisen eine rechteckige Außenkontur auf und sind beabstandet und elektrisch isoliert nebeneinander in einer ersten und zweiten Reihe 9; 10 aufgereiht.

Die in den beiden Reihen 9; 10 aufgereihten Zellverbinder 4 sind so im Verbindungssystem 1 integriert, dass bei dessen Auflage auf der Energiespeichereinrichtung 2 jeder Zellverbinder 4 einen Pluspol P und einen Minuspol M zweier nebeneinander angeordneter Zellen 3a; 3b bedeckt. Somit sind die beiden Zellen 3a 3b über den die Pole P; M bedeckenden Zellverbinder 4 elektrisch zusammengeschaltet.

Das Verbindungssystem 1 weist eine Speicherkontrolleinheit 15 auf, die in einer Trägerplatte 8 zwischen den beiden Reihen 9; 10 in einer dafür vorgesehenen Aufnahme 16 angeordnet werden kann.

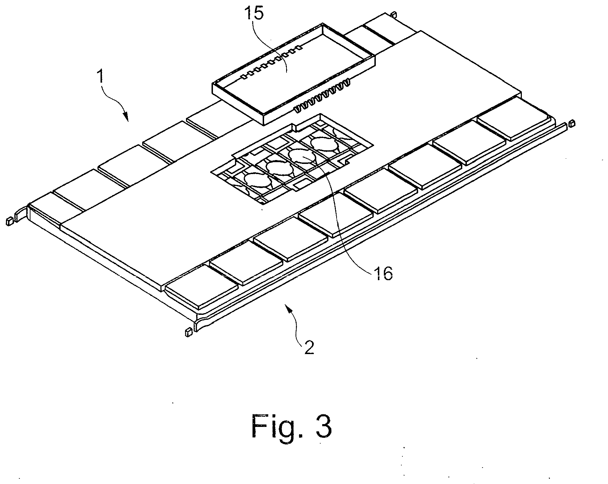

Gemäß Fig. 3 ist die Speicherkontrolleinheit 15 in die Aufnahme 16 einsetzbar und optional auch wieder aus dieser entnehmbar, ohne dass diese dadurch beschädigt oder zerstört wird. Dies ist insbesondere von Vorteil, wenn die Speicherkontrolleinheit 15 defekt ist und ersetzt werden muss.

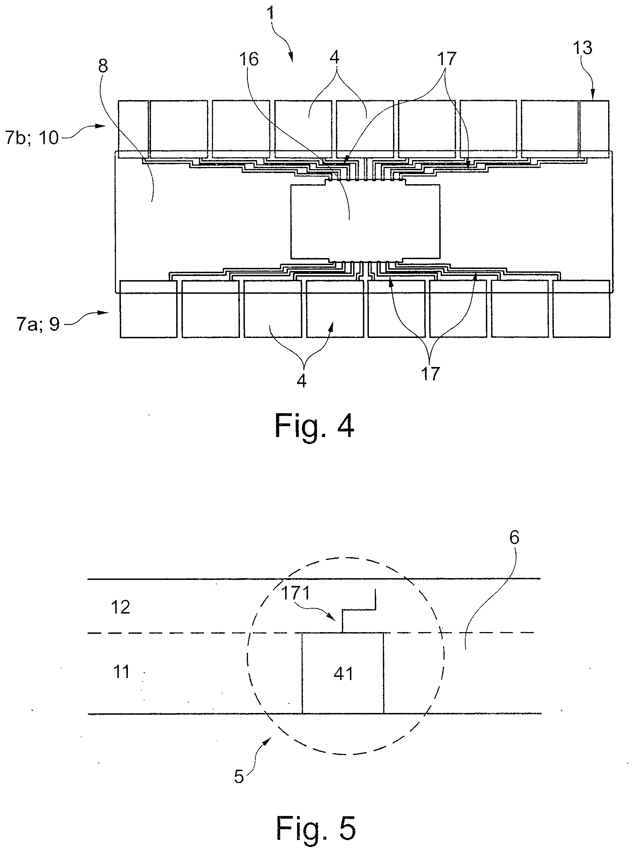

Wie in Fig. 4 gezeigt, umfasst das Verbindungssystem 1 eine Mehrzahl an Kontrollleitungen 17, wobei jedem Zellverbinder 4 eine Kontrollleitung 17 zugeordnet ist. Die Kontrollleitungen 17 verbinden die ihnen zugeordneten Zellverbinder 4 mit der in der Aufnahme 16 anordbaren Speicherkontrolleinheit 15. Über die Zellverbinder 4 und die zugeordneten Kontrollleitungen 17 sind elektrische Signale zwischen den Zellen 3 der Energiespeichereinrichtung 2 (siehe Fig. 2) und der Speicherkontrolleinheit 15 übertragbar.

Anhand dieser Signale überwacht die Speicherkontrolleinheit 15 einen Energievorrat und/oder Ladezustand der Zellen 3.

Gemäß Fig. 5 bilden mindestens einer der Zellverbinder 41 und mindestens eine dem Zellverbinder 41 zugeordnete Kontrollleitung 171 ein Übertragungselement 5. Das Übertragungselement 5 ist aus einem Halbzeug 6, insbesondere aus einem aufgewickeltem Metallband, einem sog. Coil, gestanzt, wobei das Metallband aus Aluminium oder einer Aluminiumlegierung gebildet ist. Dies bedeutet, dass beide, insbesondere der das Übertragungselement 5 bildende Zellverbinder 41 und die zugehörige Kontrollleitung 171, als Stanzteil aus dem Halbzeug 6 hergestellt sind. Somit sind der Zellverbinder 41 und die Kontrollleitung 171 einstückig ausgebildet, insbesondere einstückig miteinander verbunden und/oder einmaterialig ausgebildet.

Das das Halbzeug 6 bildende Metallband ist als ein Stufenband mit einer ersten Dicke 11 und einer zweiten Dicke 12 ausgebildet, wobei die erste Dicke 11 größer als die zweite Dicke 12 ausgebildet ist. Das Übertragungselement 5 wird so aus dem Halbzeug 6 gestanzt, dass der Zellverbinder 41 die erste Dicke 11 mit 1,2 mm aufweist. Die dem Zellverbinder 41 zugeordnete Kontrollleitung 171 weist die zweite Dicke 12 mit 0,5 mm auf.

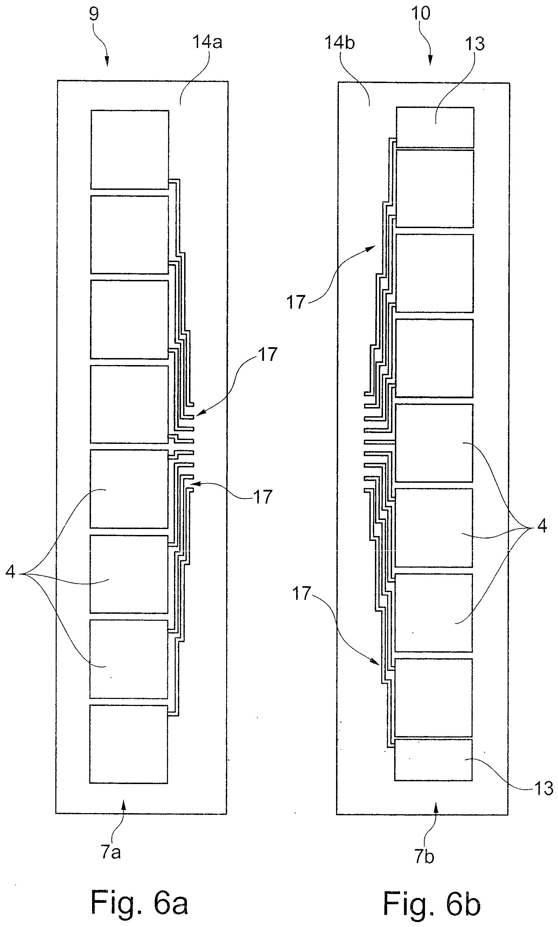

In den Figuren 6a und 6b ist gezeigt, dass mehrere Übertragungselemente 5 beabstandet nebeneinander aus einem gleichen Halbzeugabschnitt 14a; 14b ausgestanzt sind. Gemäß Figur 6a bilden acht in der ersten Reihe 9 aufgereihte Übertragungselemente 5 einen ersten Leadframe 7a. In Figur 6b ist ein zweiter Leadframe 7b gezeigt, der sieben in der zweiten Reihe 10 aufgereihte Übertragungselementen 5 und zusätzlich noch zwei Abgriffeinrichtungen 13 umfasst. Die Abgriffeinrichtungen 13 sind an den Enden der zweiten Reihe 10 angeordnet und weisen damit die gleiche erste Dicke 11 wie die Zellverbinder 4 auf. Über die beiden Abgriffeinrichtungen 13 kann eine durch die Energiespeichereinrichtung 2 erzeugte elektrische Leistung abgegriffen und z.B. auf den Motor übertragen werden.

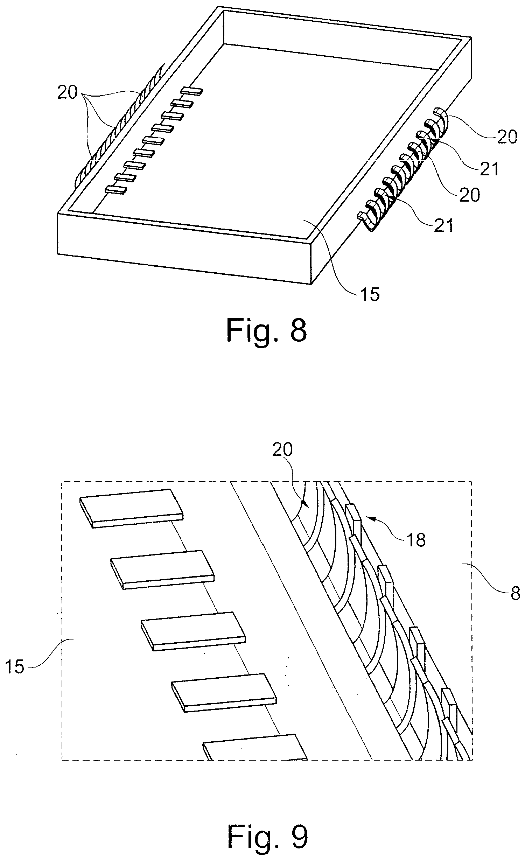

Die Abgriffeinrichtungen 13 ermöglichen weiterhin, dass die Energiespeichereinrichtung 2 an eine externe Energiequelle angeschlossen werden kann. Dadurch können die Zellen 3 (siehe Fig. 2), insbesondere in der Ausbildung als Akkumulatorzellen, wieder mit neuer Energie aufgeladen werden. Der Aufladevorgang wird von der Speicherkontrolleinheit 15 (siehe Fig. 3 oder 8) gesteuert. Diese erkennt den Ladezustand der Zellen 3 und steuert dementsprechend an, welche der Zellen 3 mehr oder weniger stark aufgeladen werden müssen. Hierbei ist es möglich, dass einzelne der Zellen 3 über die Kontrollleitungen 17 mit zusätzlicher Ladeenergie versorgt werden, um Ladeunterschiede der Zellen 3 auszugleichen.

Die beiden in den Figuren 6a; 6b gezeigten Leadframes 7a; 7b sind aus dem gleichen Material gestanzt, wobei der erste Leadframe 7a aus einem ersten Halbzeugabschnitt 14a und der zweite Leadframe 7a aus einem zweiten Halbzeugabschnitt 14b gefertigt ist. Somit stammen beide Leadframes 7a; 7b als Stanzteile aus dem selben oder dem gleichen Halbzeug 6.

Wie in Fig. 4 gezeigt, sind der erste und zweite Leadframe 7a; 7b in dem gemeinsamen Trägerteil 8 stoffschlüssig integriert, insbesondere darin verspritzt. So werden die Leadframes 7a; 7b bei und/oder direkt nach ihrer Fertigung mit Kunststoff umspritzt und dadurch zusammengehalten. Die Leadframes 7a; 7b sind so umspritzt, dass die darin aneinandergereihten Zellverbinder 4 des ersten Leadframes 7a gleichlaufend oder sogar parallel zu den aneinandergereihten Zellverbindern 4 des zweiten Leadframes 7b angeordnet sind. Somit verlaufen die Leadframes 7a; 7b entlang der Längsseiten des Trägerteils 8 schienenartig.

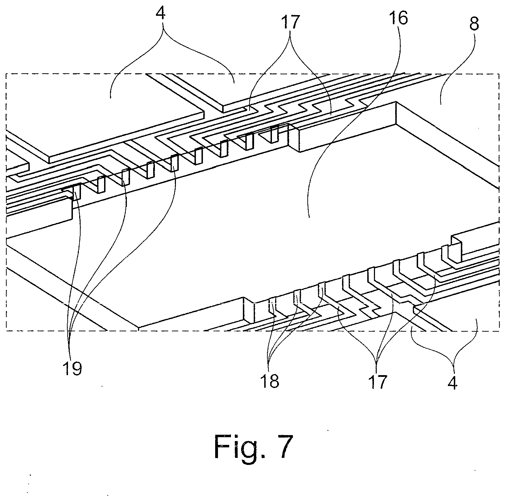

Figur 7 zeigt die Trägerplatte 8 mit der Aufnahme 16 für die Speicherkontrolleinheit 15 und die in das Trägerteil 8 eingespritzten Kontrollleitungen 17 in einer Detailansicht. Die Kontrollleitungen 17 verlaufen von den Zellverbindern 4 zu Seitenbereichen, insbesondere zu Längsseiten der Aufnahme 16, wo sie abgewinkelte Endbereiche 18 aufweisen. Diese abgewinkelten Endbereiche 18 bilden erste Kontaktfedern 18 für die in die Aufnahme 16 einsetzbare Speicherkontrolleinheit 15. Die ersten Kontaktfedern 18 weisen an der zur Aufnahme 16 gerichteten Seite erste Kontaktflächen 19 auf.

Die Zellverbinder 4 und die Kontrollleitungen 17 sind aus Kosten- und Gewichtsgründen aus Aluminium oder einer Aluminiumlegierung gebildet. Zur besseren elektrischen Signalübertragung zwischen den Zellen 3 und der Speicherkontrolleinheit 15 (Fig. 1) sind die ersten Kontaktfedern 18, zumindest aber die ersten Kontaktflächen 19 mit Kupfer oder einer Kupferlegierung beschichtet, insbesondere walzplattiert. Auch andere Beschichtungsmaterialien sind denkbar, insbesondere Silber, Zinn, Gold und Legierungen derselben.

In einem alternativen Ausführungsbeispiel sind die Zellverbinder 4 und die Kontrollleitungen 17 vollständig aus Kupfer oder der Kupferlegierung gebildet. Dabei kann die Walzplattierung der ersten Kontaktfedern 18 dementsprechend entfallen, wenn diese bereits zum Oberflächenmaterial der Zellverbinder korrespondierende Oberflächen aufweisen. Generell kann bzw. sollte die Plattierung und/oder Beschichtung derart gewählt sein, dass die in Kontakt kommenden Elemente bzw. Oberflächen, insbesondere im Hinblick auf die elektrischen Eigenschaften, gleiche oder ähnliche Materialeigenschaften und - zusammensetzungen aufweisen. Der unter der entsprechenden Oberfläche gelegene Kern der jeweiligen Elemente ist dabei zunächst von geringerer Relevanz.

Insbesondere können elektrisch leitende und bei dem Verbindungssystem verwendete Elemente Kerne aus Kupfer, Kupferlegierung, Aluminium oder Aluminiumlegierung oder einem Plattierverbund aus Kupfer und Aluminium und/oder Legierungen derselben aufweisen. Zur Anpassung, insbesondere zur Anpassung bzw. Optimierung der Übergangswiderstände sind die in Kontakt kommenden Elemente, insbesondere entsprechende Kontaktstellen, bevorzugt mit korrespondierenden Beschichtungen bzw. Plattierungen versehen.

In Figur 8 ist die Speicherkontrolleinheit 15 in einer Detaildarstellung gezeigt. Die Speicherkontrolleinheit 15 umfasst eine Mehrzahl an abgewinkelten zweiten Kontaktfedern 20. Die zweiten Kontaktfedern 20 ragen von den Längsseiten der Speicherkontrolleinheit 15 heraus und weisen auf der zur Speicherkontrolleinheit 15 abgewandten Seite zweite Kontaktflächen 21 auf.

Die zweiten Kontaktfedern 20 sind aus Kupfer oder einer Kupferlegierung gebildet, beispielsweise Messing, eine Messinglegierung, Bronze oder eine Bronzelegierung. Um die Kontaktierung und die Signalübertragung zwischen den Kontaktflächen 19; 21 der ersten und zweiten Kontaktfedern 18; 20 zu verbessern, können die zweiten Kontaktfedern 20, zumindest aber deren zweite Kontaktflächen 21, mit einer zur Oberfläche der ersten Kontaktfedern 18 korrespondierenden, bzw. mit einer an die Oberflächenbeschaffenheit der ersten Kontaktfedern 18 angepassten, Beschichtung oder Plattierung versehen sein. Je nach Kern und Oberfläche der ersten Kontaktfedern 18 eignen sich für die zweiten Kontaktfedern 20 Beschichtungen/Plattierungen mit Kupfer, Silber, Gold, Aluminium, Zinn und Legierungsmaterialien mit den genannten Elementen.

Generell eigenen sich als Kontaktpaarungen zwischen miteinander zur Stromleitung in Kontakt gebrachten Elementen insbesondere die folgenden Kombinationen: Kupfer-Kupfer, Aluminium-Aluminium, Kupfer beschichtet - Aluminium, Kupfer - Aluminium beschichtet, Kupfer beschichtet - Aluminium beschichtet. Der Begriff "beschichtet" soll dabei Beschichten und Plattieren umfassen. Selbst bei artgleichen Kombinationen, wie z. B. Kupfer - Kupfer oder Aluminium - Aluminium, können Beschichtungen, beispielsweise aus Silber, Gold, Zinn und anderen, insbesondere als Korrosionsschutz, verwendet werden. Insgesamt zeigt sich, dass die zu kontaktierenden Elemente gleiche oder verschiedene Kerne aufweisen können, wobei durch Beschichtungen und/oder Plattierungen erreicht wird, dass artgleiche Kontaktflächen miteinander in Kontakt kommen.

In Figur 9 ist gezeigt, dass sich die ersten und zweiten Kontaktfedern 18; 20 an ihren Kontaktflächen 19; 21 berühren, wenn die Speicherkontrolleinheit 15 in die Aufnahme 16 eingesetzt ist. Dadurch dass sich die ersten und zweiten Kontaktflächen 19; 21 kontaktieren, wird die elektrische Verbindung zur Signalübertragung zwischen der Speicherkontrolleinheit 15 und den Zellverbindern 4 und dadurch den Zellen 3 der Energiespeichereinrichtung 2 (siehe Fig. 2) hergestellt. Dadurch wird die Überwachung des Energievorrats und/oder Ladezustands der Zellen 3 und die Steuerung des Ladevorgangs, insbesondere einer zu ladenden Energiemenge durch die Speicherkontrolleinheit 15 ermöglicht.

### Bezugszeichenliste

- 1: Verbindungssystem
- 2: Energiespeichereinrichtung
- 3: Zellen
- 4: Zellverbinder
- 5: Übertragungselement
- 6: Halbzeug
- 7: Leadframe
- 8: Trägerplatte
- 9: erste Reihe
- 10: zweite Reihe
- 11: erste Dicke
- 12: zweite Dicke
- 13: Abgriffeinrichtungen
- 14: Halbzeugabschnitt
- 15: Speicherkontrolleinheit
- 16: Aufnahme
- 17: Kontrollleitungen
- 18: Endbereiche/erste Kontaktfedern
- 19: erste Kontaktflächen
- 20: zweite Kontaktfedern
- 21: zweite Kontaktflächen

## Patentansprüche

1. Verbindungssystem (1) für eine Energiespeichereinrichtung (2), wobei die Energiespeichereinrichtung (2) eine Mehrzahl an Zellen (3) aufweist,
a) mit einer Mehrzahl von durch ein Trägersystem gehalterten Zellverbindern (4) zum elektrischen Zusammenschalten der Zellen (3),
b) mit einer Speicherkontrolleinheit (15) zur Überwachung eines Energievorrats und/oder Ladezustands der Zellen (3), wobei das Trägersystem dazu ausgebildet ist, die Speicherkontrolleinheit (15) aufzunehmen und/oder zu haltern und wobei die Speicherkontrolleinheit (15) mit dem Trägersystem integriert oder lösbar ausgebildet ist, und
c) mit einer Mehrzahl durch das Trägersystem fixierten Kontrollleitungen (17) zur Übertragung elektrischer Signale zwischen den Zellverbindern (4) und der Speicherkontrolleinheit (15),.
wobei
d) einer der Zellverbinder (4) und mindestens eine dem Zellverbinder (4) zugeordnete Kontrollleitung (17) als Übertragungselement (5) einstückig ausgebildet sind, insbesondere einstückig gemeinsam aus einem einzigen Halbzeug (6) gefertigt sind,
e) mindestens zwei der Zellverbinder (4) beabstandet zueinander in einer ersten Reihe (9) und mindestens zwei weitere Zellverbinder (4) beabstandet zueinander in einer zweiten Reihe (10) angeordnet sind und von jedem Zellverbinder (4) aus die jeweils zugeordnete Kontrollleitung (17) zur Speicherkontrolleinheit (15) oder zu einer hierfür vorgesehenen Aufnahme (16) verläuft, wobei die Zellverbinder (4) der ersten Reihe (9) und die zugeordneten Kontrollleitungen (17) zusammen einen sogenannten ersten Leadframe (7) und die Zellverbinder (4) der zweiten Reihe (10) und die zugeordneten Kontrollleitungen (17) zusammen einen sogenannten zweiten Leadframe (7) bilden, und
f) der erste und der zweite Leadframe (7) in einem vom Trägersystem umfassten, gemeinsamen Trägerteil (8) angeordnet sind, wobei das Trägerteil (8) die Schnittstelle und / oder Aufnahme (16) für die Speicherkontrolleinheit (15) aufweist.

2. Verbindungssystem (1) nach Anspruch 1, wobei das Übertragungselement (5) als ein Stanzteil ausgebildet ist.

3. Verbindungssystem (1) nach Anspruch 1 oder 2, wobei das Übertragungselement (5) aus einem Stufenband mit einer ersten und einer zweiten Dicke (11; 12) gestanzt ist, wobei der Zellverbinder (4) die erste Dicke (11) und die Kontrollleitung (17) die zweite Dicke (12) aufweist und wobei die erste Dicke (11) größer als die zweite Dicke (12) ausgebildet ist.

4. Verbindungssystem (1) nach einem der vorhergehenden Ansprüche, wobei sich die in der Reihe (9) des ersten Leadframes (7a) angeordneten Zellverbinder (4) und die in der Reihe (10) des zweiten Leadframes (7b) angeordneten Zellverbinder (4) gleichlaufend erstrecken.

5. Verbindungssystem (1) nach dem vorhergehenden Anspruch, wobei der erste Leadframe (7a) aus einem ersten Halbzeugabschnitt (14a) und der zweite Leadframe (7b) aus einem zweiten Halbzeugabschnitt (14b) des Halbzeugs (6) gebildet ist.

6. Verbindungssystem (1) nach einem der vorhergehenden Ansprüche, wobei der erste und zweite Leadframe (7a; 7b) in dem gemeinsamen Trägerteil (8) stoffschlüssig integriert sind.

7. Verbindungssystem (1) nach einem der vorangehenden Ansprüche, wobei das Trägerteil (8), erste Kontaktfedern (18) mit frei zugänglichen ersten Kontaktflächen (19) aufweist, welche durch Endbereiche der im Trägersystem angeordneten Kontrollleitungen (17) gebildet sind.

8. Verbindungssystem (1) nach Anspruch 7, wobei die Speicherkontrolleinheit (15) zweite Kontaktfedern (20) mit zweiten Kontaktflächen (21) aufweist, die die ersten Kontaktfedern (18) an den ersten Kontaktflächen (19) bei Einsetzung der Speicherkontrolleinheit (15) in die Aufnahme (16) kontaktieren und die Signalübertragung zwischen der Speicherkontrolleinheit (15) und den Zellverbindern (4) gewährleisten, wobei jeweils korrespondierende erste Kontaktfedern (18) und zweite Kontaktfedern (20) vorzugsweise durch eine formschlüssige, kraftschlüssige und/oder stoffschlüssige Verbindung miteinander verbunden sind.

9. Verbindungssystem (1) nach einem der vorhergehenden Ansprüche, wobei die Zellverbinder und Kontrollleitungen, insbesondere das Halbzeug (6), aus Aluminium, einer Aluminiumlegierung, Kupfer oder einer Kupferlegierung gebildet sind/ist.

10. Verbindungssystem (1) nach Anspruch 9, wobei die Zellverbinder und/oder Kontrollleitungen, insbesondere das Halbzeug (6), zumindest teil- und/oder abschnittsweise, zumindest jedoch elektrische Kontaktierungsstellen, mit einem anderem Material, insbesondere ausgewählt aus der Gruppe Kupfer, Aluminium, Silber, Zinn, Gold und Legierungen derselben, insbesondere Kupferlegierungen und Aluminiumlegierungen, plattiert und/oder beschichtet sind/ist.

11. Verbindungssystem (1) nach Anspruch 7 oder 8, wobei die ersten und/oder zweiten Kontaktfedern (20) aus einer Kupferlegierung, insbesondere Bronze oder einer Bronzelegierung oder Messing oder einer Messinglegierung, gebildet sind, und diese vorzugsweise zumindest teilweise mit einem anderen Material, insbesondere Silber, Zinn und/oder Gold und/oder Legierungen mit zumindest einem der Elemente Silber, Zinn, Gold, beschichtet sind.

12. Energiespeichereinrichtung (2), insbesondere Batterie, mit dem Verbindungssystem (1) nach einem der vorhergehenden Ansprüche, wobei Pole der Energiespeichereinrichtung mit Zellverbindern des Verbindungssystems elektrisch miteinander verschaltet sind.

## Claims

1. Connection system (1) for an energy storage device (2), wherein the energy storage device (2) comprises a plurality of cells (3),
a) with a plurality of cell connectors (4) held by a carrier system, for electrical interconnection of the cells (3),
b) with a storage control unit (15) for monitoring the energy supply and/or charging condition of the cells (3), wherein the carrier system is configured to this end to receive and/or hold the storage control unit (15) and wherein the storage control unit (15) is configured in an incorporated or detachable manner with the carrier system, and,
c) with a plurality of control lines (17) fixed by the carrier system, for transmitting electrical signals between the cell connectors (4) and the storage control unit (15),
wherein
d) one of the cell connectors (4) and at least one control line (17) associated with said cell connector (4) are configured in one piece as a transmission element (5), in particular are manufactured in one piece jointly from a single semi-finished product (6),
e) at least two of the cell connectors (4) are arranged spacedly in a first row (9) and at least two further cell connectors (4) are arranged spacedly in a second row (10) and the respective associated control line (17) extends from each cell connector (4) to the storage control unit (15) or to a receptacle (16) provided therefor, wherein the cell connectors (4) of the first row (9) and the associated control lines (17) together form a first "leadframe" (7) and the cell connectors (4) of the second row (10) and the associated control lines (17) together form a second "leadframe" (7) and
f) the first and the second leadframe (7) are arranged in a common carrier part (8) comprised by the carrier system, wherein the carrier part (8) has the interface and/or receptacle (16) for the storage control unit (15).

2. Connection system (1) according to Claim 1, wherein the transmission element (5) takes the form of a punched part.

3. Connection system (1) according to Claim 1 or 2, wherein the transmission element (5) is punched out of a stepped strip with a first and a second thickness (11, 12), wherein the cell connector (4) displays the first thickness (11) and the control line (17) displays the second thickness (12) and wherein the first thickness (11) is greater than the second thickness (12).

4. Connection system (1) according to one of the preceding claims, wherein the cell connectors (4) arranged in the row (9) of the first leadframe (7a) and the cell connectors (4) arranged in the row (10) of the second leadframe (7b) extend in the same direction.

5. Connection system (1) according to the preceding claim, wherein the first leadframe (7a) is formed from a first semi-finished product portion (14a) and the second leadframe (7b) is formed from a second semi-finished product portion (14b) of the semi-finished product (6).

6. Connection system (1) according to one of the preceding claims, wherein the first and second leadframes (7a, 7b) are incorporated in a bonded manner into the common carrier part (8).

7. Connection system (1) according to one of the preceding claims, wherein the carrier part (8) comprises first contact springs (18) with freely accessible first contact surfaces (19), which are formed by end regions of the control lines (17) arranged in the carrier system.

8. Connection system (1) according to Claim 7, wherein the storage control unit (15) comprises second contact springs (20) with second contact surfaces (21), which contact the first contact springs (18) at the first contact surfaces (19) on insertion of the storage control unit (15) into the receptacle (16) and ensure signal transmission between the storage control unit (15) and the cell connectors (4), wherein respectively corresponding first contact springs (18) and second contact springs (20) are preferably connected together by an interlocking, non-interlocking and/or bonded joint.

9. Connection system (1) according to one of the preceding claims, wherein the cell connectors and control lines, in particular the semi-finished product (6), are/is formed from aluminium, an aluminium alloy, copper or a copper alloy.

10. Connection system (1) according to Claim 9, wherein the cell connectors and/or control lines, in particular the semi-finished product (6), are/is plated and/or coated at least partially and/or in places, but at least at electrical contact points, with another material, in particular selected from the group comprising copper, aluminium, silver, tin, gold and alloys thereof, in particular copper alloys and aluminium alloys.

11. Connection system (1) according to Claim 7 or 8, wherein the first and/or second contact springs (20) are formed from a copper alloy, in particular bronze or a bronze alloy or brass or a brass alloy, and these are preferably coated at least partially with another material, in particular silver, tin and/or gold and/or alloys with at least one of the elements silver, tin, gold.

12. Energy storage device (2), in particular battery, having the connection system (1) according to one of the preceding claims, wherein poles of the energy storage device are electrically connected to one another by cell connectors of the connection system.

## Revendications

1. Système de connexion (1) pour un dispositif de stockage d'énergie (2), dans lequel le dispositif de stockage d'énergie (2) comprend une pluralité d'éléments (3),
a) comportant une pluralité de connecteurs d'éléments (4) maintenus par un système de support destiné à interconnecter électriquement les éléments (3),
b) comportant une unité de commande de stockage (15) pour surveiller une réserve d'énergie et/ou un état de charge des éléments (3), dans lequel le système de support est conçu pour loger et/ou maintenir l'unité de commande de stockage (15) et dans lequel l'unité de commande de stockage (15) est conçue pour être intégrée avec le système de support ou être amovible, et
c) comportant une pluralité de lignes de commande (17) fixées par le système de support pour transmettre des signaux électriques entre les connecteurs d'éléments (4) et l'unité de commande de stockage (15),
dans lequel
d) l'un des connecteurs d'éléments (4) et au moins une ligne de commande (17) associée au connecteur d'éléments (4) sont réalisés d'un seul tenant en tant qu'élément de transmission (5), et en particulier sont fabriqués d'un seul tenant à partir d'un produit semi-fini (6) unique,
e) au moins deux des connecteurs d'éléments (4) sont disposés à distance l'un de l'autre dans une première rangée (9) et au moins deux autres connecteurs d'éléments (4) sont disposés à distance l'un de l'autre dans une seconde rangée (10) et la ligne de commande (17) respectivement associée s'étend depuis chaque connecteur d'éléments (4) jusqu'à l'unité de commande de stockage (15) ou jusqu'à un logement (16) prévu pour celle-ci, dans lequel les connecteurs d'éléments (4) de la première rangée (9) et les lignes de commande (17) associées forment ensemble un premier dispositif dit grille de connexion (7) et les connecteurs d'éléments (4) de la seconde rangée (10) et les lignes de commande (17) associées forment ensemble un second dispositif dit grille de connexion (7), et
f) les première et seconde grilles de connexion (7) sont disposées dans une partie de support (8) commune compris dans le système de support, dans lequel la partie de support (8) comporte l'interface et/ou le logement (16) destiné à l'unité de commande de stockage (15).

2. Système de connexion (1) selon la revendication 1, dans lequel l'élément de transmission (5) est réalisé sous la forme d'une pièce estampée.

3. Système de connexion (1) selon la revendication 1 ou 2, dans lequel l'élément de transmission (5) est découpé à partir d'une bande à gradins ayant une première et une seconde épaisseur (11 ; 12), dans lequel le connecteur d'éléments (4) présente la première épaisseur (11) et la ligne de commande (17) présente la seconde épaisseur (12), et dans lequel la première épaisseur (11) est supérieure à la seconde épaisseur (12).

4. Système de connexion (1) selon l'une des revendications précédentes, dans lequel les connecteurs d'éléments (4) disposés dans la rangée (9) de la première grille de connexion (7a) et les connecteurs d'éléments (4) disposés dans la rangée (10) de la seconde grille de connexion (7b) s'étendent parallèlement.

5. Système de connexion (1) selon la revendication précédente, dans lequel la première grille de connexion (7a) est formée d'une première section de produit semi-fini (14a) et la seconde grille de connexion (7b) est formée d'une seconde section de produit semi-fini (14b) du produit semi-fini (6).

6. Système de connexion (1) selon l'une des revendications précédentes, dans lequel les première et seconde grilles de connexion (7a ; 7b) sont intégrées par complémentarité de matériau dans la partie de support (8) commune.

7. Système de connexion (1) selon l'une des revendications précédentes, dans lequel la partie de support (8) comporte des premiers ressorts de contact (18) présentant des premières surfaces de contact (19) librement accessibles qui sont formées par des zones d'extrémité des lignes de commande (17) disposées dans le système de support.

8. Système de connexion (1) selon la revendication 7, dans lequel l'unité de commande de stockage (15) comprend des seconds ressorts de contact (20) présentant des secondes surfaces de contact (21) qui sont en contact avec les premiers ressorts de contact (18) au niveau des premières surfaces de contact (19) lorsque l'unité de commande de stockage (15) est introduite dans le logement (16) et qui assurent la transmission des signaux entre l'unité de commande de stockage (15) et les connecteurs d'éléments (4), dans lequel des premiers ressorts de contact (18) et des seconds ressorts de contact (20) correspondants sont reliés les uns aux autres de préférence par une liaison par complémentarité de forme, par complémentarité de forme et/ou par complémentarité de matériau.

9. Système de connexion (1) selon l'une des revendications précédentes, dans lequel les connecteurs d'éléments et les lignes de commande, en particulier le produit semi-fini (6), sont réalisés en aluminium, en alliage d'aluminium, en cuivre ou en alliage de cuivre.

10. Système de connexion (1) selon la revendication 9, dans lequel les connecteurs d'éléments et/ou les lignes de commande, en particulier le produit semi-fini (6), sont plaqués et/ou revêtus au moins partiellement et/ou par sections mais au moins en des points de contact électriques, d'un autre matériau, choisi en particulier dans le groupe constitué du cuivre, de l'aluminium, de l'argent, de l'étain, de l'or et des alliages de ceux-ci, en particulier des alliages de cuivre et des alliages d'aluminium.

11. Système de connexion (1) selon la revendication 7 ou 8, dans lequel les premiers et/ou seconds ressorts de contact (20) sont formés d'un alliage de cuivre, en particulier de bronze ou d'un alliage de bronze ou de laiton ou d'un alliage de laiton, et ceux-ci sont de préférence au moins partiellement revêtus d'un autre matériau, en particulier d'argent, d'étain et/ou d'or et/ou d'alliages avec au moins l'un des éléments argent, étain et or.

12. Dispositif de stockage d'énergie (2), en particulier batterie, comportant le système de connexion (1) selon l'une des revendications précédentes, dans lequel des pôles du dispositif de stockage d'énergie sont électriquement connectés les uns aux autres par des connecteurs d'éléments du système de connexion.
